# EUROPÄISCHE PATENTSCHRIFT

(11) **EP 2 735 088 B1**
(45) Veröffentlichungstag und Bekanntmachung des Hinweises auf die Patenterteilung: **26.04.2017**
(21) Anmeldenummer: 12728548.4
(22) Anmeldetag: 19.06.2012
(51) Int. Cl.: H02K 7/08, F16H 55/24, F16H 57/039, F16H 57/02, F16H 57/021

(54) **GETRIEBE-ANTRIEBSEINRICHTUNG**
GEARED DRIVING DEVICE
DISPOSITIF D'ENTRAÎNEMENT DE TRANSMISSION

(30) Priorität: 21.07.2011 DE 102011079527
(43) Veröffentlichungstag der Anmeldung: 28.05.2014
(73) Patentinhaber: Robert Bosch GmbH, 70442 Stuttgart (DE)
(72) Erfinder: HAWIGHORST, Achim, 77830 Buehlertal (DE); STEURER, Sonja, 77815 Buehl Moos (DE)
(86) Internationale Anmeldenummer: PCT/EP2012/061725
(87) Internationale Veröffentlichungsnummer: WO 2013/010740

(56) Entgegenhaltungen:
- WO-A1-2004/057729
- WO-A1-2004/057731
- DE-A1- 3 811 519
- DE-A1- 19 652 929
- US-A1- 2006 243 078
- US-A1- 2007 102 228

## Beschreibung

### Stand der Technik

Die Erfindung betrifft eine Getriebe-Antriebseinrichtung nach dem Oberbegriff des Anspruchs 1.

Eine derartige Getriebe-Antriebseinrichtung ist aus der DE 10 2009 020 283 A1 bekannt. Sie dient insbesondere bei Getriebe-Antriebseinrichtungen, die über ein Getrieberad ein Element, beispielsweise einen Sitz oder eine Fensterscheibe verstellen, dazu, das Axialspiel der mit dem Getrieberad zusammenwirkenden Welle zu minimieren, da ansonsten bei einer Drehrichtungsumkehr der Welle Geräusche entstehen können, die als Komforteinbuße wahrgenommen werden können. Die bekannte Getriebe-Antriebseinrichtung weist eine in zwei Lagereinrichtungen gelagerte Ankerwelle auf, wobei eine Axialspielkompensationseinrichtung vorgesehen ist, die gegen einen Außenring der zweiten, zwischen dem Antriebsmotor und dem Getrieberad angeordneten Lagereinrichtung anliegt, die wiederum mit ihrem Innenring gegen einen Bund an der Ankerwelle gedrückt ist. Demgegenüber ist die erste Lagereinrichtung in einem Endbereich des Gehäuses der Antriebseinrichtung formschlüssig aufgenommen. Die bekannte Axialspielkompensationseinrichtung besteht aus mehreren Teilen und ist relativ aufwendig aufgebaut.

Die WO 2004/057729 A1 zeigt einen Elektromotor, bei dem der Rotor axial beidseitig mittels Federelementen gegen die jeweiligen Innenringe von Kugellagern verspannt ist.

Die DE 19652929 A1 zeigt ebenfalls einen Elektromotor, dessen Rotorwelle mittels zwei Kugellager in einem Gehäuse gelagert ist. Zwischen einem Kugellager und einer Gehäusewand wird hierbei das Ende der Rotorwelle axial mit mittels einer Spannscheibe gegen den Innenring eines Kugellagers verspannt.

In der WO 2004/057731 A1 ist ein Reversiermotor mit einer Ankerwelle gezeigt, die in mindestens einem Kugellager gelagert ist. Dabei wird die Ankerwelle axial beidseitig des Innenrings des Kugellagers mittels elastischen Elementen abgestützt.

Bei der US 2007/102228 A1 ist eine Rotorwelle mittels zwei Kugellagern in einem Gehäuse gelagert. Beidseitig eines auf der Rotorwelle gelagerten Getriebeelements ist die Rotorwelle mittels separaten Spannscheiben jeweils axial gegen die Innenringe der Kugellager verspannt.

Die DE 3811519 A1 zeigt eine Einstelleinrichtung, bei der mittels einer Einstellmutter der Lagersitz der Welle derart eingestellt wird, dass diese spielfrei in einem Gehäuse gelagert ist.

Gemäß der US 2006/0243078 A1 ist eine Ankerwelle wiederum mittels zwei Kugellagern in einem Gehäuse gelagert. Zur Axialspieleinstellung liegt an einem Innenring des ersten Kugellagers eine Fixierscheibe an, wobei ein Innenring des zweiten Kugellagers mit der Ankerwelle mittels einer Gewindemutter axial verspannt wird.

### Offenbarung der Erfindung

Ausgehend von dem dargestellten Stand der Technik liegt der Erfindung die Aufgabe zugrunde, eine Getriebe-Antriebseinrichtung nach dem Oberbegriff des Anspruchs 1 derart weiterzubilden, dass sie bei alternativer Anordnung auf die zweite Lagereinrichtung relativ einfach aufgebaut ist und zuverlässig arbeitet. Diese Aufgabe wird erfindungsgemäß bei einer Getriebe-Antriebseinrichtung mit den Merkmalen des Anspruchs 1 gelöst. Der Erfindung liegt dabei die Idee zugrunde, die Axialspielkompensationseinrichtung im Gegensatz zum Stand der Technik derart anzuordnen, dass diese in Wirkverbindung mit dem Innenring der zweiten Lagereinrichtung angeordnet ist. Gemäß der Erfindung ist es vorgesehen, dass auf der Ankerwelle ein den Verzahnungsbereich tragendes, hülsenförmiges Anschlagelement verschiebbar angeordnet ist, das auf der der zweiten Lagereinrichtung zugewandten Seite eine Stirnfläche aufweist, die an dem Innenring der zweiten Lagereinrichtung anliegt, und dass das Anschlagelement zur Axialspielkompensation auf der Ankerwelle fixierbar ist.

Vorteilhafte Weiterbildungen der erfindungsgemäßen Getriebe-Antriebseinrichtung sind in den Unteransprüchen angegeben.

In einer besonders bevorzugten konstruktiven Ausgestaltung der Erfindung ist vorgesehen, dass die Axialspielkompensationseinrichtung ein ringförmiges Halteelement aufweist, das auf der Ankerwelle fixierbar ist. Dadurch wird ein besonders einfacher Aufbau der Axialspielkompensationseinrichtung ermöglicht, bei der das Halteelement beispielsweise im einfachsten Fall als Ring ausgebildet ist.

Eine sichere Befestigung des Halteelements mit der Ankerwelle findet bevorzugt über eine Laserstrahlschweißverbindung statt.

Eine weitere alternative Ausgestaltung der Erfindung sieht vor, dass die Ankerwelle mit einem Endbereich im Innenring der zweiten Lagereinrichtung aufgenommen ist, und dass auf der Ankerwelle ein insbesondere den Verzahnungsbereich tragende Hülse axialverschiebbar angeordnet ist, die axial in den Innenring der zweiten Lagereinrichtung hineinragt, und die axial auf der Ankerwelle festsetzbar ist, so dass die Hülse mit einer Durchmesserstufe gegen den Innenring anliegt.

In weiterer alternativer Ausgestaltung, die keine zusätzlichen Befestigungselemente o.ä. benötigt wird vorgeschlagen, dass die Ankerwelle auf der der ersten

Lagereinrichtung zugewandten Seite mit einem Endabschnitt in einem hülsenförmigen Fortsatz einer Lageraufnahme der ersten Lagereinrichtung in einer Pressverbindung aufgenommen ist.

Dabei ist es in einer konstruktiv besonders bevorzugten Ausgestaltung vorgesehen, dass die Lageraufnahme mit einem Außenring der ersten Lagereinrichtung verbunden ist, und dass der Innenring der ersten Lagereinrichtung axial gegen den ersten Anschlag gedrückt ist.

Es ist jedoch auch möglich, eine erfindungsgemäße Getriebe-Antriebseinrichtung derart auszubilden, dass der Ankerwelle auf der der ersten Lagereinrichtung zugewandten Seite ein Anschlagelement verschiebbar angeordnet ist, und dass das Anschlagelement auf der Ankerwelle fixierbar ist.

Die erfindungsgemäße Getriebe-Antriebseinrichtung findet bevorzugt Verwendung als Teil eines Komfortantriebs eines Kraftfahrzeugs, beispielsweise eines Sitzverstellungsantriebs, eines Fensterheberantriebs oder ähnlichem.

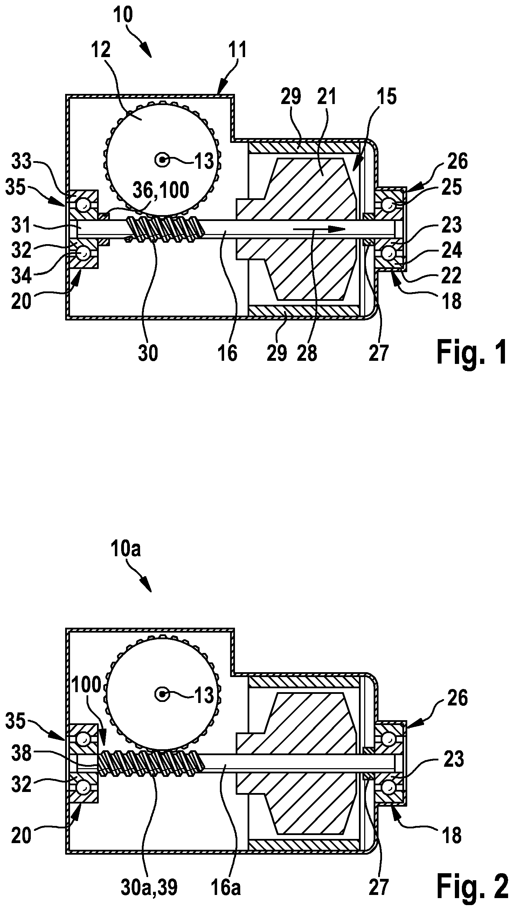

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigt in den Fig. 1 bis 5 jeweils vereinfachte Längsschnitte durch erfindungsgemäße Antriebseinrichtungen.

Gleiche Bauteile bzw. Bauteile mit gleicher Funktion sind in den Figuren mit den gleichen Bezugsziffern versehen.

In der Fig. 1 ist stark vereinfacht eine erste erfindungsgemäße Getriebe-Antriebseinrichtung 10 dargestellt, wie sie als Bestandteil eines Komfortantriebs in einem Kraftfahrzeug eingesetzt ist. Dabei wird unter einem Komfortantrieb beispielsweise ein Sitzverstellungsantrieb, ein Fensterheberantrieb oder ähnliches verstanden.

Die Getriebe-Antriebseinrichtung 10 weist ein Gehäuse 11 auf, in dem ein Getrieberad 12 in einer Achse 13 drehbeweglich angeordnet ist. Das Getrieberad 12 ist im dargestellten Ausführungsbeispiel Teil eines einstufigen Getriebes, das Getriebe kann jedoch auch mehrere Zahnräder bzw. Getrieberäder aufweisen und somit mehrstufig ausgebildet sein. Mittels des Getrieberades 12 wird ein nicht dargestelltes Element des Komfortantriebs, insbesondere ein Sitz oder eine Scheibe, zumindest mittelbar angetrieben, wobei das Getrieberad 12 in beide Drehrichtungen bewegt werden kann.

Der Antrieb des Getrieberads 12 erfolgt mittels eines Elektromotors 15, der eine Ankerwelle 16 aufweist, die in zwei Lagereinrichtungen 18, 20 drehbar gelagert ist. Dabei ist die erste Lagereinrichtung 18 auf der dem Getrieberad 12 abgewandten Seite des Ankers 21 in einem topfförmig aus dem Gehäuse 11 herausragenden Gehäuseendabschnitt 22 aufgenommen. Die erste Lagereinrichtung 18 weist einen Innenring 23 sowie einen Außenring 24 auf, zwischen denen Lagerkörper 25 aufgenommen sind. In dem in der Fig. 1 dargestellten Ausführungsbeispiel ist der Außenring 24 der ersten Lagereinrichtung 18 axial fixiert in dem Gehäuseendabschnitt 22 aufgenommen, indem der Außenring 24 gegen die einen Axialanschlag ausbildende Stirnseite 26 des Gehäuseendabschnitts 22 von innen anliegt. Um die Ankerwelle 16 zum Innenring 23 der ersten Lagereinrichtung 18 axial zu fixieren, ist ein Sicherungselement 27 vorgesehen, das axial unverrückbar auf der Ankerwelle 16 angeordnet ist, und das bei einer Axialkraftbeaufschlagung in Richtung des Pfeils 28 gegen den Innenring 23 drückt. Der Elektromotor 15 weist weiterhin an der Gehäuseinnenwand des Gehäuses 11 angeordnete Permanentmagnetelemente 29 auf.

Auf der Ankerwelle 16 ist ein eine Verzahnung aufweisender Verzahnungsbereich 30 ausgebildet, der mit einer Außenverzahnung des Getrieberades 12 zusammenwirkt. Insbesondere ist der Verzahnungsbereich 30 als Schneckenverzahnung ausgebildet, wobei die Ankerwelle 16 beispielsweise durch Schmieden bzw. Umformen den Verzahnungsbereich 30 erhält.

Der der ersten Lagereinrichtung 18 gegenüberliegende Endbereich 31 der Ankerwelle 16 ist längsverschiebbar in der zweiten Lagereinrichtung 20 geführt. Die zweite Lagereinrichtung 20 weist, in Analogie zur ersten Lagereinrichtung 18, einen Innenring 32, einen Außenring 33 sowie zwischen dem Innenring 32 und dem Außenring 33 angeordnete Lagerkörper 34 auf. Die zweite Lagereinrichtung 20 liegt beispielsweise gegen die (innere) Stirnfläche 35 des Gehäuses 11 an, die somit einen Axialanschlag für die zweite Lagereinrichtung 20 ausbildet. Zwischen dem Verzahnungsbereich 30 und der zweiten Lagereinrichtung 20 ist ein ringförmiges Halteelement 36 angeordnet. Das ringförmige Halteelement 36 ist in einem Zustand zur Montage der Getriebe-Antriebseinrichtung 10 axial verschiebbar auf der Ankerwelle 16 angeordnet. Das Halteelement 36 wirkt axial gegen den Innenring 32 der zweiten Lagereinrichtung 20 und ist als Axialspielkompensationseinrichtung 100 ausgebildet. Um das zwischen den beiden Lagereinrichtungen 18, 20 vorhandene Axialspiel in Längsrichtung der Ankerwelle 16 zu kompensieren ist es vorgesehen, dass bei der Montage der Getriebe-Antriebseinrichtung 10 die Ankerwelle 16 mit einer Axialkraft in Richtung des Pfeils 28 bewegt wird, so dass das Sicherungselement 27 gegen den Innenring 23 der ersten Lagereinrichtung 18 anliegt, wodurch das Axialspiel in der ersten Lagereinrichtung 18 eliminiert ist. Weiterhin wird das Halteelement 36 entgegen der Richtung des Pfeils 28 gegen den Innenring 32 der zweiten Lagereinrichtung 20 gedrückt, so dass auch das Axialspiel innerhalb der zweiten Lagereinrichtung 20 eliminiert wird. In diesem Zustand wird das Halteelement 36 auf der Ankerwelle 16 axial fixiert, insbesondere durch eine Laserstrahlschweißung. Durch die Kompensation der beiden Lagerspiele der Lagereinrichtungen 18, 20 ist somit die Ankerwelle 16 innerhalb der Getriebe-Antriebseinrichtung 10 axial positioniert bzw. festgelegt.

In der Fig. 2 ist eine modifizierte Antriebseinheit 10a dargestellt. Die Getriebe-Antriebseinrichtung 10a unterscheidet sich von der Getriebe-Antriebseinrichtung 10 dadurch, dass der Verzahnungsbereich 30a gegenüber dem Verzahnungsbereich 30 axial derart verlängert ausgebildet ist, dass der Verzahnungsbereich 30a mit einer der zweiten Lagereinrichtung 20 zugewandten Stirnfläche 38 an dem Innenring 32 der zweiten Lagereinrichtung 20 anliegt. Ferner ist es vorgesehen, dass der Verzahnungsbereich 30a auf der Ankerwelle 16a verschiebbar angeordnet ist, indem beispielsweise der Verzahnungsbereich 30a als hülsenförmiges, separates Element 39 ausgebildet ist, die die Axialspielkompensationseinrichtung 100 ausbildet. Bei der Montage der Getriebe-Antriebseinrichtung 10a wird das Element 39 mit seiner Stirnfläche 38 derart gegen den Innenring 32 gedrückt, dass die Axialspiele der beiden Lagereinrichtungen 18, 20 eliminiert sind. Anschließend wird das Element 39 auf der Ankerwelle 16a axial fixiert, beispielsweise durch eine Verschweißung, oder durch ein zusätzliches, in der Fig. 2 nicht dargestelltes Sicherungselement.

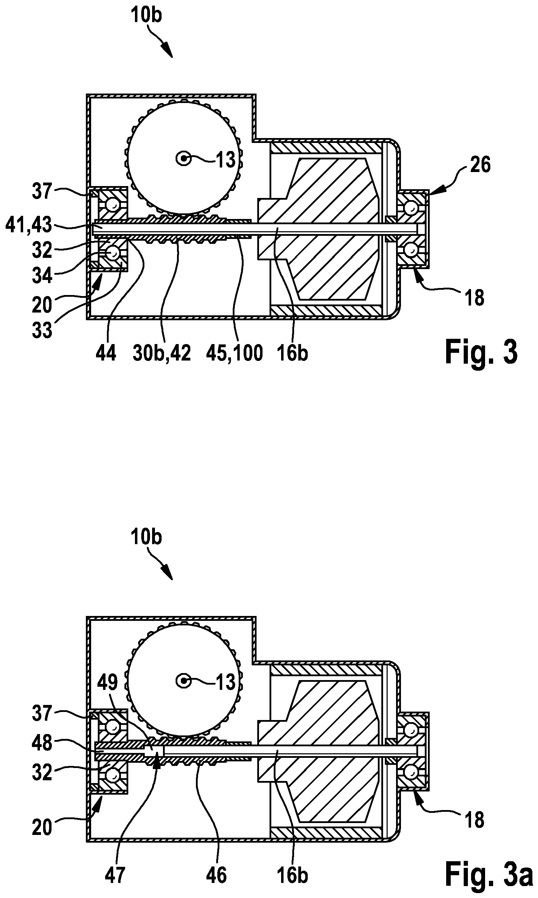

In der Fig. 3 ist eine weitere, modifizierte Getriebe-Antriebseinrichtung 10b dargestellt. Bei der Getriebe-Antriebseinrichtung 10b ist es vorgesehen, dass ein den Verzahnungsbereich 30b tragendes, hülsenförmiges Element 42 vorgesehen ist, das auf das der zweiten Lagereinrichtung 20 zugewandte Ende 41 der Ankerwelle 16b aufgeschoben werden kann. Dabei ragt ein Endbereich 43 des Elements 42 mit (geringem) radialem Spiel in den Innenring 32 der zweiten Lagereinrichtung 20 hinein und liegt mit einer Durchmesserstufe 44 an der einen Stirnseite des Innenrings 32 an. Es kann vorgesehen sein, dass die Passung zwischen der Bohrung des Elements 42 und dem Außendurchmesser der Ankerwelle 16b als Reib- bzw. Presspassung ausgebildet ist, das heißt, dass sich das Element 42 nur durch Aufbringen einer in axialen Richtung der Ankerwelle 16b wirkenden Kraft auf der Ankerwelle 16b verschieben lässt. Alternativ kann es auch vorgesehen sein, dass ein Bereich der Ankerwelle 16b (außen) mit einer Rändelung o.ä. versehen ist, um die gewünschte Passung zwischen der Ankerwelle 16b und dem Element 42 zu bewirken. Weiterhin kann beispielweise ein Sicherungsring 45 oder ein Abschnitt des Elements 42 vorgesehen sein, der eine Fixierung des Elements 42 auf der Ankerwelle 16b sicherstellt. Zur Axialspielkompensation ist es vorgesehen, dass das Element 42 gegen die zweite Lagereinrichtung 20, und dass die Ankerwelle 16b in die entgegengesetzte Richtung, d.h. in Richtung der ersten Lagereinrichtung 18, geschoben wird, so dass die Lagerspiele der beiden Lagereinrichtungen 18, 20 eleminiert werden. Dann wird das Element 42 über den Sicherungsring 45 oder eine Laserschweißung zwischen dem Element 42 und der Ankerwelle 16b auf der Ankerwelle 16b fixiert.

In der Fig. 3a ist eine Ausführungsform dargestellt, die sich von der Ausführungsform der Fig. 3 dadurch unterscheidet, dass das hülsenförmige Element 46 eine Durchgangsbohrung 47 mit zwei Bohrungsabschnitten 48, 49 aufweist, wobei der Bohrungsabschnitt 48 als Entlüftungsbohrung zur Erleichterung der Montage der Ankerwelle 16b in den Bohrungsabschnitt 49 wirkt, und wobei das Ende 41 der Ankerwelle 16b lediglich in den Bohrungsabschnitt 49 hineinragt.

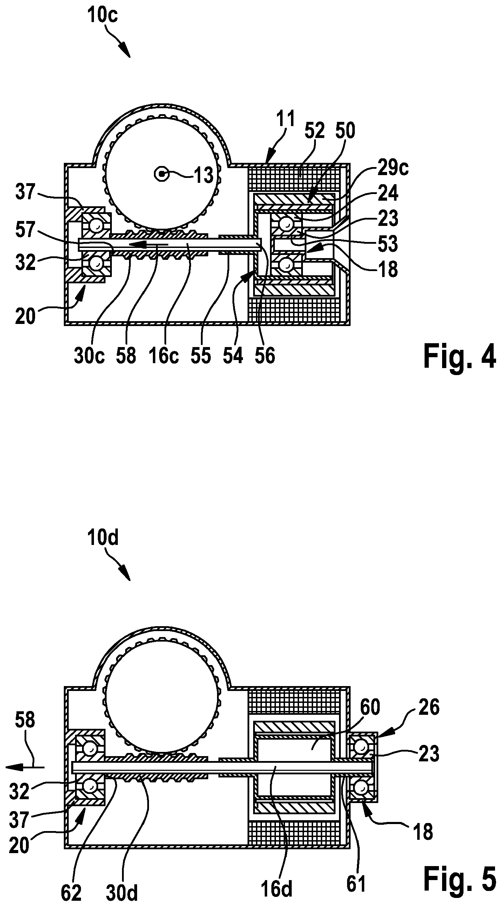

In der Fig. 4 ist eine Getriebe-Antriebseinrichtung 10c dargestellt, bei der die Permanentmagnetelemente 29c auf einem Rotor 50 angeordnet sind, während die Wicklungen 52 der Getriebe-Antriebseinrichtung 10c am Innenumfang des Gehäuses 11 angeordnet sind. Der Rotor 50 ist in der ersten Lagereinrichtung 18 gelagert, wobei der Innenring 23 der ersten Lagereinrichtung 18 in einem einen Axialanschlag ausbildenden dornartigen Fortsatz 53 des Gehäuses 11 aufgenommen ist. Der Außenring 24 der ersten Lagereinrichtung 18 ist in einem Lagerkäfig 54 des Rotors 50 aufgenommen bzw. von diesem umfasst, der wiederum einen hülsenartigen Fortsatz 55 aufweist. In dem Fortsatz 55 ist das der zweiten Lagereinrichtung 20 abgewandte Ende 56 der Ankerwelle 16c aufgenommen. Die Ankerwelle 16c wirkt mit einer Stirnseite 57 ihres Verzahnungsbereichs 30c gegen den Innenring 32 der zweiten Lagereinrichtung 20.

Zum Eliminieren des Axialspiels der beiden Lagereinrichtungen 18, 20 wird die Ankerwelle 16c mit einer Axialkraft in Richtung des Pfeils 58 kraftbeaufschlagt, wobei das Ende 56 seiner vorläufigen Montageposition etwas aus dem Fortsatz 55 axial herausgezogen wird. Entweder durch eine entsprechende Presspassung zwischen dem Fortsatz 55 und dem Ende 56 bleibt bei der Reduktion der angesprochenen Axialkraft die Position zwischen der Ankerwelle 16c und dem Fortsatz 55 bestehen, oder aber, in der kraftbeaufschlagten Position der Ankerwelle 16c wird das Ende 56 mit dem Fortsatz 55 axial fest verbunden, z. B. durch eine Schweißverbindung oder ein zusätzliches Sicherungselement.

Zuletzt ist in der Fig. 5 eine weitere Getriebe-Antriebseinrichtung 10d dargestellt. Die Getriebe-Antriebseinrichtung 10d unterscheidet sich von der Getriebe-Antriebseinrichtung 10c dadurch, dass die erste Lagereinrichtung 18 in Analogie zu den Getriebe-Antriebseinrichtungen 10 und 10a ausgebildet bzw. angeordnet ist. Darüber hinaus ist der Rotor 60 auf der Ankerwelle 16d axial verschiebbar angeordnet und weist auf der der ersten Lagereinrichtung 18 zugewandten Seite einen ringförmigen Anlagebereich 61 auf, der mit einer Stirnfläche gegen den Innenring 23 der ersten Lagereinrichtung 18 anliegt. Demgegenüber wirkt der Verzahnungsbereich 30d mit einer Stirnseite 62 gegen den Innenring 32 der zweiten Lagereinrichtung 20. Zur Einstellung des Axialspiels wird die Ankerwelle 16d in Richtung des Pfeils 58 mit einer Axialkraft beaufschlagt und anschließend der Rotor 60 auf der Ankerwelle 16d entgegen der Richtung des Pfeils 58 verschoben, bis der Anlagebereich 61 in Wirkverbindung mit dem Innenring 23 der ersten Lagereinrichtung 18 gerät und diesen entgegen der Richtung des Pfeils 58 verschiebt. In dieser Position wird der Rotor 60 wiederum mit der Ankerwelle 16d axial unverrückbar befestigt, z. B. durch eine Laserstrahlverbindung oder ein zusätzliches Sicherungselement.

Die soweit beschriebenen Getriebe-Antriebseinrichtungen 10, 10a bis 10d können in vielfältiger Art und Weise abgewandelt bzw. modifiziert werden, ohne vom Erfindungsgedanken abzuweichen.

## Patentansprüche

1. Getriebe-Antriebseinrichtung (10; 10a bis 10d), mit einem Gehäuse (11), in dem ein in einer Ankerwelle (16; 16a bis 16d) zumindest mittelbar gelagerter Elektromotor (15) angeordnet ist, wobei die Ankerwelle (16; 16a bis 16d) über einen Verzahnungsbereich (30; 30a bis 30d) mit einem Getrieberad (12) zusammenwirkt, mit wenigstens zwei, an gegenüberliegenden Endbereichen der Ankerwelle (16; 16a bis 16d) angeordneten Lagereinrichtungen (18, 20), von denen die erste Lagereinrichtung (18) von der Ankerwelle (16; 16a bis 16d) mit einer Axialkraft beaufschlagt und gegen einen gehäusefesten ersten Anschlag (26; 53) anliegt, und mit einer Axialspielkompensationseinrichtung (100), die mit der Ankerwelle (16; 16a bis 16d) wirkverbunden angeordnet ist, und die die einen Innenring (32) und einen Außenring (33) aufweisende zweite Lagereinrichtung (20) gegen einen zweiten gehäusefesten Anschlag (35; 37) mit Axialkraft beaufschlagt, wobei die Axialspielkompensationseinrichtung (100) zumindest mittelbar in Wirkverbindung mit dem Innenring (32) der zweiten Lagereinrichtung (20) angeordnet ist, **dadurch gekennzeichnet,**
**dass** auf der Ankerwelle (16a) ein den Verzahnungsbereich (30a) tragendes, hülsenförmiges Anschlagelement (39) verschiebbar angeordnet ist, das auf der der zweiten Lagereinrichtung (20) zugewandten Seite eine Stirnfläche (38) aufweist, die an dem Innenring (32) der zweiten Lagereinrichtung (20) anliegt, und dass das Anschlagelement (39) zur Axialspielkompensation auf der Ankerwelle (16a) fixierbar ist.

2. Antriebseinrichtung nach Anspruch 1,
**dadurch gekennzeichnet,**
**dass** die Axialspielkompensationseinrichtung (100) ein ringförmiges Halteelement (36; 43) aufweist, das auf der Ankerwelle (16; 16b) fixierbar ist.

3. Antriebseinrichtung nach Anspruch 2,
**dadurch gekennzeichnet,**
**dass** die Verbindung des Halteelements (36) mit der Ankerwelle (16) mittels einer Laserstrahlschweißverbindung erfolgt.

4. Antriebseinrichtung nach Anspruch 1,
**dadurch gekennzeichnet,**
**dass** der Verzahnungsbereich (30a) als Schneckenverzahnung ausgebildet ist.

5. Antriebseinrichtung nach Anspruch 1,
**dadurch gekennzeichnet,**
**dass** die Ankerwelle (16b) mit einem Endbereich (43) im Innenring (32) der zweiten Lagereinrichtung (20) aufgenommen ist, und dass auf der Ankerwelle (16b) ein insbesondere den Verzahnungsbereich (30b) tragende Hülse (42) axialverschiebbar angeordnet ist, die axial in den Innenring (32) der zweiten Lagereinrichtung (20) hineinragt, und die axial auf der Ankerwelle (16b) festsetzbar ist, so dass die Hülse (42) mit einer Durchmesserstufe (44) gegen den Innenring (32) anliegt.

6. Antriebseinrichtung nach Anspruch 1,
**dadurch gekennzeichnet,**
**dass** die Ankerwelle (16c) auf der der ersten Lagereinrichtung (18) zugewandten Seite mit einem Endabschnitt (56) in einem hülsenförmigen Fortsatz (55) einer Lageraufnahme (54) der ersten Lagereinrichtung (18) in einer Pressverbindung aufgenommen ist.

7. Antriebseinrichtung nach Anspruch 6,
**dadurch gekennzeichnet,**
**dass** die Lageraufnahme (54) mit einem Außenring (24) der ersten Lagereinrichtung (18) verbunden ist, und dass der Innenring (23) der ersten Lagereinrichtung (18) axial gegen den ersten Anschlag (53) gedrückt ist.

8. Antriebseinrichtung nach Anspruch 1,
**dadurch gekennzeichnet,**
**dass** der Ankerwelle (16d) auf der der ersten Lagereinrichtung (18) zugewandten Seite ein Anschlagelement (61) verschiebbar angeordnet ist, und dass das Anschlagelement (61) auf der Ankerwelle (16d) fixierbar ist.

9. Antriebseinrichtung nach Anspruch 8,
**dadurch gekennzeichnet,**
**dass** das Anschlagelement (61) auf den Innenring (23) der ersten Lagereinrichtung (18) wirkt.

10. Antriebseinrichtung nach einem der Ansprüche 1 bis 9,
**dadurch gekennzeichnet,**
**dass** die Antriebseinrichtung Teil eines Komfortantriebs eines Kraftfahrzeugs ist.

## Claims

1. Geared drive device (10; 10a to 10d), having a housing (11), in which an electric motor (15) is arranged which is mounted at least indirectly in an armature shaft (16; 16a to 16d), the armature shaft (16; 16a to 16d) interacting via a toothing region (30; 30a to 30d) with a gearwheel (12), having at least two bearing devices (18, 20) which are arranged on opposite end regions of the armature shaft (16; 16a to 16d) and of which the first bearing device (18) loads by means of the armature shaft (16; 16a to 16d) with an axial force and bears against a first stop (26; 53) which is fixed to the housing, and having an axial play compensation device (100) which is arranged such that it is operatively connected to the armature shaft (16; 16a to 16d) and which loads the second bearing device (20) which has an inner ring (32) and an outer ring (33) with axial force against a second stop (35; 37) which is fixed to the housing, the axial play compensation device (100) being arranged such that it is at least indirectly in operative connection with the inner ring (32) of the second bearing device (20), **characterized in that** a sleeve-shaped stop element (39) which supports the toothing region (30a) is arranged displaceably on the armature shaft (16a), which stop element (39) has, on the side which faces the second bearing device (20), an end face (38) which bears against the inner ring (32) of the second bearing device (20), and **in that** the stop element (39) can be fixed on the armature shaft (16a) for axial play compensation.

2. Drive device according to Claim 1, **characterized in that** the axial play compensation device (100) has an annular holding element (36; 43) which can be fixed on the armature shaft (16; 16b).

3. Drive device according to Claim 2, **characterized in that** the connection of the holding element (36) to the armature shaft (16) takes place by means of a laser beau welded joint.

4. Drive device according to Claim 1, **characterized in that** the toothing region (30a) is configured as a worm toothing system.

5. Drive device according to Claim 1, **characterized in that** the armature shaft (16b) is received with an end region (43) in the inner ring (32) of the second bearing device (20), and **in that** a sleeve (42) which supports, in particular, the toothing region (30b) is arranged axially displaceably on the armature shaft (16b), which sleeve (42) protrudes axially into the inner ring (32) of the second bearing device (20) and can be fixed axially on the armature shaft (16b), with the result that the sleeve (42) bears with a diameter step (44) against the inner ring (32).

6. Drive device according to Claim 1, **characterized in that**, on the side which faces the first bearing device (18), the armature shaft (16c) is received with an end section (56) in a press joint in a sleeve-shaped projection (55) of a bearing seat (54) of the first bearing device (18).

7. Drive device according to Claim 6, **characterized in that** the bearing seat (54) is connected to an outer ring (24) of the first bearing device (18), and **in that** the inner ring (23) of the first bearing device (18) is pressed axially against the first stop (53).

8. Drive device according to Claim 1, **characterized in that** a stop element (61) is arranged displaceably the armature shaft (16d) on the side which faces the first bearing device (18), and **in that** the stop element (61) can be fixed on the armature shaft (16d).

9. Drive device according to Claim 8, **characterized in that** the stop element (61) acts on the inner ring (23) of the first bearing device (18).

10. Drive device according to one of Claims 1 to 9, **characterized in that** the drive device is part of a comfort drive of a motor vehicle.

## Revendications

1. Dispositif d'entraînement de transmission (10 ; 10a à 10d), comprenant un boîtier (11) dans lequel est disposé un moteur électrique (15) supporté au moins indirectement dans un arbre d'induit (16 ; 16a à 16d), l'arbre d'induit (16 ; 16a à 16d) coopérant avec un pignon de transmission (12) par le biais d'une région de denture (30 ; 30a à 30d), comprenant au moins deux systèmes de palier (18, 20) disposés au niveau de régions d'extrémité opposées de l'arbre d'induit (16 ; 16a à 16d), dont le premier système de palier (18) sollicite par une force axiale par l'arbre d'induit (16 ; 16a à 16d) et s'applique contre une première butée fixée au boîtier (26 ; 53), et comprenant un système de compensation du jeu axial (100) qui est disposé en liaison fonctionnelle avec l'arbre d'induit (16 ; 16a à 16d), et qui sollicite avec une force axiale un deuxième système de palier (20) présentant une bague intérieure (32) et une bague extérieure (33) contre une deuxième butée fixée au boîtier (35 ; 37), le système de compensation du jeu axial (100) étant disposé au moins indirectement en liaison fonctionnelle avec la bague intérieure (32) du deuxième système de palier (20), **caractérisé en ce que**
sur l'arbre d'induit (16a) est disposé de manière déplaçable un élément de butée (39) en forme de douille portant la région de denture (30a), lequel présente, sur le côté tourné vers le deuxième système de palier (20), une surface frontale (38) qui s'applique contre la bague intérieure (32) du deuxième système de palier (20), et **en ce que** l'élément de butée (39) peut être fixé sur l'arbre d'induit (16a) pour compenser le jeu axial.

2. Dispositif d'entraînement selon la revendication 1,
**caractérisé en ce que**
le système de compensation du jeu axial (100) présente un élément de retenue de forme annulaire (36 ; 43) qui peut être fixé sur l'arbre d'induit (16 ; 16b).

3. Dispositif d'entraînement selon la revendication 2,
**caractérisé en ce que**
la connexion de l'élément de retenue (36) à l'arbre d'induit (16) s'effectue par le biais d'une connexion par soudage à faisceau laser.

4. Dispositif d'entraînement selon la revendication 1,
**caractérisé en ce que**
la région de denture (30a) est réalisée sous forme de denture de vis sans fin.

5. Dispositif d'entraînement selon la revendication 1,
**caractérisé en ce que**
l'arbre d'induit (16b) est reçu avec une région d'extrémité (43) dans la bague intérieure (32) du deuxième système de palier (20), et **en ce qu'**une douille (42) portant notamment la région de denture (30b) est disposée de manière déplaçable axialement sur l'arbre d'induit (16b), laquelle pénètre axialement dans la bague intérieure (32) du deuxième système de palier (20), et laquelle peut être fixée axialement sur l'arbre d'induit (16b) de telle sorte que la douille (42) s'applique contre la bague intérieure (32) avec un échelonnement de diamètre (44).

6. Dispositif d'entraînement selon la revendication 1,
**caractérisé en ce que**
l'arbre d'induit (16c) est reçu dans un ajustement serré du côté tourné vers le premier système de palier (18) avec une portion d'extrémité (56) dans une saillie en forme de douille (55) d'un logement de palier (54) du premier système de palier (18).

7. Dispositif d'entraînement selon la revendication 6,
**caractérisé en ce que**
le logement de palier (54) est connecté à une bague extérieure (24) du premier système de palier (18), et **en ce que** la bague intérieure (23) du premier système de palier (18) est pressée axialement contre la première butée (53).

8. Dispositif d'entraînement selon la revendication 1,
**caractérisé en ce**
**qu'**un élément de butée (61) est disposé de manière déplaçable l'arbre d'induit (16d) sur le côté tourné vers le premier système de palier (18) et en ce que l'élément de butée (61) peut être fixé sur l'arbre d'induit (16d).

9. Dispositif d'entraînement selon la revendication 8,
**caractérisé en ce que**
l'élément de butée (61) agit sur la bague intérieure (23) du premier système de palier (18).

10. Dispositif d'entraînement selon l'une quelconque des revendications 1 à 9,
**caractérisé en ce que** le dispositif d'entraînement fait partie d'un entraînement de confort d'un véhicule automobile.
